# EUROPEAN PATENT SPECIFICATION

(11) **EP 0 845 444 B1**
(45) Date of publication and mention of the grant of the patent: **23.01.2002**
(21) Application number: 97115059.4
(22) Date of filing: 30.08.1997
(51) Int. Cl.: C04B 28/02, C04B 24/18, C04B 24/26

(54) **Improved ligninsulfonate concrete admixtures**
Ligninsulfonatzusatzmittel für Beton
Adjuvant à base de sulfonate de lignine pour béton

(30) Priority: 29.11.1996 NO 965105
(43) Date of publication of application: 03.06.1998
(73) Proprietor: Sika AG, vorm. Kaspar Winkler & Co., CH-8048 Zürich (CH)
(72) Inventor: Bürge, Theodor A., 8954 Geroldswil (CH); Mäder, Urs, Dr., 8500 Frauenfeld (CH); Schober, Irene, Dr., 8008 Zürich (CH)
(74) Representative: Blum, Rudolf Emil Ernst

(56) References cited:
- EP-A- 0 604 676
- EP-A- 0 619 277
- DE-A- 3 723 158
- US-A- 4 906 298
- CHEMICAL ABSTRACTS, vol. 103, no. 10, 9 September 1985 Columbus, Ohio, US; abstract no. 75438c, KAJIMA CORP. ET AL.: "slump loss preventing agents for hydraulic cement" XP000061238 & JP 06 054 957 A
- DATABASE WPI Section Ch, Week 8641 Derwent Publications Ltd., London, GB; Class A93, AN 86-267222 XP002055876 & JP 61 183 157 A (KAO CORP) , 15 August 1986

## Description

### CROSS REFERENCE TO RELATED APPLICATIONS

This application claims the priority of the Norvegian patent application No. 96 5105, filed on November 29, 1996, the disclosure of which is incorporated herein by reference in its entirety.

### BACKGROUND OF THE INVENTION

Polycondensates such as the sodium or calcium salts of sulfonated naphthalene formaldehyde condensates described in U.S. Patent No 3,537,869, or salts of sulfonated melamine formaldehyde condensates such as those described in DE-PS 1 671 017, have been used as super-plasticizers in order to improve the workability and the time dependent flow behaviour of cement, mortars and concrete. These water reducing agents are able to improve the flowability of such mixtures, but this flowability may not be maintained, according to normal practice, for a sufficiently long period of time. As a result, additional amounts of water reducing agents have to be added at certain intervals.

EP-A-604 676 discloses water-soluble copolymers on the basis of vinylacetate-maleic acid with optional addition of ligninsulfonate.

Hence, it was an objective of this invention to avoid said above mentioned drawback, i.e. to provide a concrete admixture that improves the flow of freshly prepared concrete, thus, extending the workability of the prepared concrete upon the addition of such an admixture, however, without essentially retarding the setting time and the strength gain. This objective was achieved by an improved ligninsulfonate concrete admixture according to claim 1. Preferred embodiments are given in the dependent claims.

### BRIEF SUMMARY OF THE INVENTION

The present invention relates to an improved ligninsulfonate concrete admixture, whereby said admixture comprises 50 to 95% by weight of a ligninsulfonate blended with 5 to 50% by weight of a water soluble linear copolymer of vinyl acetate and a N-substituted maleamic acid in a molar ratio of 1:1. Said linear copolymers are represented by the following general formula (A) 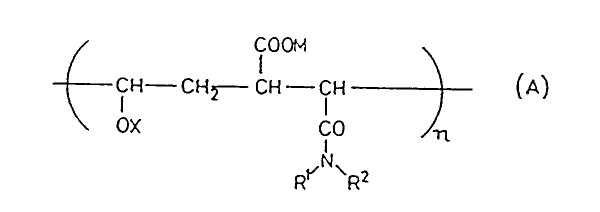 wherein
R1 is as R2, or represents hydrogen;
R2 is a C1 to C4 alkyl residue, a cycloaliphatic or aromatic ring system; or
R1 and R2 may together form a morpholin ring with the nitrogen atom to which they are bonded;
X represents a hydrogen atom or the group -CO-CH3;
M represents a hydrogen atom, a monovalent or divalent metal ion, a substituted or unsubstituted ammonium group.

### BRIEF DESCRIPTION OF THE DRAWINGS

The invention will be better understood and objects other than those set forth above will become apparent when consideration is given to the following detailed description thereof. Such description makes reference to the annexed drawing (1), which shows the flow improvement by adding the inventive polymer to ligninsulfonate without essentially retarding the setting time.

### DETAILED DESCRIPTION OF THE INVENTION

Thus, for the substituent X in formula (A) being either a hydrogen atom, or a -CO-CH₃ residue, the invention ultimately relates to a blend of ligninsulfonate and novel water soluble polymers, which are represented either by the following general formula (1), 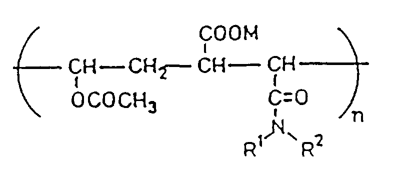 and which are obtainable by polymerizing vinylacetate and maleamic acid or its N-substituted derivatives in the presence of a free radical producing initiator, or said water soluble polymers are represented by the following general formula (2), 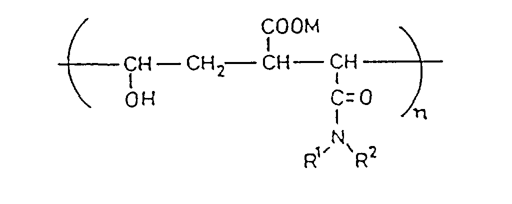 which are the hydrolysis-products of the polymers of formula (1) and which could be prepared by saponification of the acetate group of the compounds of formula (1).

Said N-substituted maleamic acids constitute the reaction products of maleic anhydride with amines, aminocarboxylic acids, aminogroups - containing aromatic sulfonic acids and amino alcohols at a molar ratio of 1:1.

In a preferred embodiment, the substituent R2 of the water soluble polymer of the fomula (A) is an unsubstituted or substituted C1 to C4 alkyl residue, whereby the substitutents are selected from the group consisting of :
i. alkali metal carboxylates,
ii. alkaline earth metal carboxylates,
iii. hydroxy groups, and
iv. amino groups.

In a further preferred embodiment, the substituent R2 of the water soluble polymer of the fomula (A) is an unsubstituted or substituted cycloaliphatic or aromatic ring system, whereby the substitutents are selected from the group consisting of :
i. carboxylic acid groups,
ii. sulfonic acid groups,
iii. alkali metal carboxylates,
iv. alkali metal sulfonates,
v. alkaline earth metal carboxylates,
vi. alkaline earth metal sulfonates, and
vii. hydroxyethyl or hydroxypropyl groups.

The concrete admixture of the present invention comprises a ligninsulfonate blended with a water-soluble linear copolymer of vinyl acetate and a N-substituted maleamic acid in a molar ratio of 1:1. The copolymers (1) or (2) of the inventive admixture preferably display a weight average molecular weight in the range of 1'000-200'000.

The ligninsulfonate and the copolymer could be present as an aqueous solution or as a dried or spray dried powder. The aqueous solution is containing the copolymer in an amount ranging usually from 0.01 to 60% by weight.

In a preferred embodiment, the concrete admixture could furthermore contain at least one of the following additives: antifoaming agents, sulfonated melamine-formaldehyde polycondensates, sulfonated naphthalene-formaldehyde polycondensates, phosphonic acids and derivatives thereof, nitrates, nitrites, thiocyanates and surfactants.

As can be seen from the drawing (1), upon the addition of the inventive polymeric concrete admixture to freshly prepared concrete, the flow of said concrete increases from 49 cm (containing no inventive admixture) to 55 cm (with about 25% of polymer in the blend). At the same time, the setting time is retarded only to a relatively minor extent, i.e. from 9.8 hours to 8.8 upon the addition of 25% of the inventive polymer in the blend.

The inventive co-polymers of the admixture are prepared by a peroxide-catalyzed radical chain-copolymerization of vinylacetate (3) 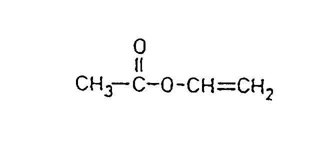 with maleamic acid salt or an N-substituted derivative thereof. Maleamic monomers, represented by the general formula (4) are prepared by the reaction of maleic anhydride (5) with a preferably hydrophilic, amino compound (6) in aqueous solution at moderate pH values:

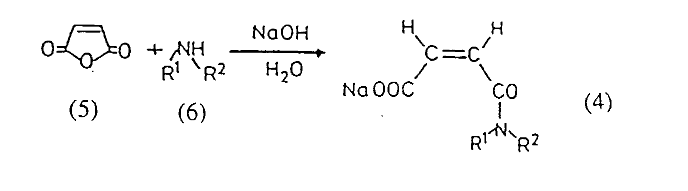

Vinyl acetate copolymerizes readily with certain olefinic compounds which alone do not homopolymerize readily, such as maleic acid and maleamic acids. To growing copolymer chains having a vinyl acetate residue at the growing end, virtually all other monomers add themselves more readily thereto than vinyl acetate monomers itself. This low reactivity of vinylacetate is largely responsible for the alternating sequence of the structural units in the inventive copolymer.

The copolymerization is preferably carried out in an aqueous solution containing about 50 mole percent of the salt of a maleamic acid and about 50 mole percent of vinylacetate in the presence of at least one polymerization catalyst combined with a reducing agent to form a redox catalyst system. The reducing agents may be ferrous sulfate, sodium hydroxymethane sulfinate and alkalimetal sulfites and metabisulfites.

The free radical producing catalyst is preferably selected from at least one peroxy compound like hydrogene peroxide or sodium peroxide. The reaction is preferably carried out at a pH ranging from 4.0 to about 7.5 at a temperature of 5 to 120°C, preferably 10 - 75°C.

The copolymerization process is characterized by a high yield, a low concentration of residual monomers and a surprisingly high polymerization rate.

The following examples illustrate in more detail the preparation of the inventive polymers and their use as admixtures in cementitious compositions.

### Example 1 (E-1)

### Poly {[4-(carboxymethyl) amino - 4 - oxo - 2 - butenoic acid] - co - [vinylacetate]}sodium salt

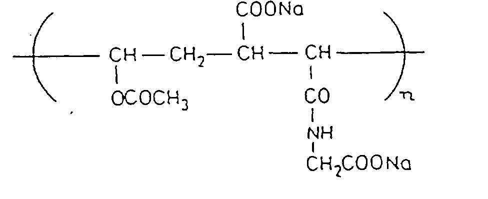

A solution of the sodium salt of glycine was prepared by adding 53.67 g (0.715 mol) of glycine under stirring to 341.7 g of a 8.3% sodiumhydroxide solution and maintaining the temperature at 30°C. 72.75 g (0.742 mol) of maleic anhydride and 64 g (0.80 mol) of 50% sodium hydroxide was then added simultaneously under stirring and cooling in such a way that the pH was kept within a range of 5.5. to 6.5 and the temperature maintained in the range of 30°C and 35°C. After the addition was finished, the solution was stirred for another 15 minutes at 30°C and the pH was adjusted to 6.6. - 6.8 by adding sodium hydroxide. Then, 150 g of deionized water, 5 g of triethyleneglycol monomethylether, 8 g of amidosulfonic acid, 0.1 g of ferrous sulfate heptahydrate and 16.8 g of 33% hydrogen peroxide were added. After testing pH to be in the range of 4.8 - 5.2, 58 g (0.674 mol) of vinylacetate was added under vigorous stirring and then dropwise addition of a solution of 8.4 g of Rongalit C (sodium hydroxymethane sulfinate) in 20 g of water was immediately started. The polymerisation was carried out for 1 hour whereby the temperature was maintained at 30 - 33°C. The reaction product was then cooled to 20°C and neutralised by adding 10 g of sodium metabisulfite and 12 g of 50% sodium hydroxide.

A clear solution of pH 6.5 was obtained having a viscosity of 35 mP.s and 30 % solid matter content. The vinylacetate to maleic acid ratio in the polymers was 1 : 1 and the weight average molecular weight was about 17'000. The original solution (E-1), as described above, was used for comparison tests in the examples 6 and 7.

### Example 2 (E-2)

### Poly {[4-(carboxymethyl) amino - 4 - oxo - 2 - butenoic acid] - co - [vinylalcohol]}sodium salt

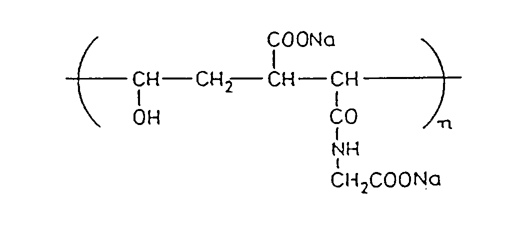

Polyvinylalcoholes are prepared from polyvinylacetates by replacement of acetate groups by hydroxyl groups.

Thus, to 100 g of solution (E-1) of example 1, 10 g of 50% sodium hydroxide were added thereto under agitation. The mixture was then heated to 80°C and stirred for 10 hours. A 95% degree of saponification was determined by acidimetric titration. After cooling to 20°C, the solution was neutralized by the careful addition of concentrated sulfuric acid.

A polymer of the following properties was obtained:

| | |
|---|---|
| pH | 7.2 |
| Viscosity (20°C) | mPa.s (Brookfield) |
| Polymer content | 25% |
| M_{w} | 15'000 |

The original solution (E-2), as described above, was used for comparitive tests in examples 6 and 7.

### Example 3 (E-3)

### Poly {[4-(sulphophenyl) amino - 4 - oxo - 2 - butenoic acid] - co - [vinylacetate]}sodium salt

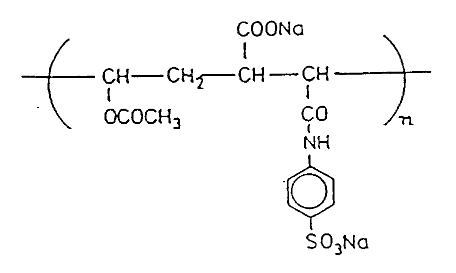

A solution of sodium sulfanilate was prepared by adding under vigorous agitation 122.5 g (0.707 mol) of sulfanilic acid to a mixture of 56.7 g 50% sodium hydroxide and 0.017 g tributylphosphate in 444 g water.

The reaction mixture was then cooled to 28°C and 72.75 g (0.742) of maleic anhydride and 64 g (0.80 mol) of 50% sodium hydroxide were added simultaneously under stirring and cooling in such a way that the pH value was kept within a range of 5.5 to 6.5 and the temperature was maintained in the range of 30 to 40°C. After the addition was finished, the solution was stirred for another 15 minutes at 30°C and the pH was adjusted to 6.6 to 6.8 by adding a few drops of 50% sodium hydroxide. Then, 150g of deionized water, 5 g of triethyleneglycol-monomethylether, 8g of amidosulfonic acid, 0.1 of ferrous sulfate heptahydrate and 16.8 g 33% hydrogenperoxide were added. After testing the pH to be in the range of 4.8 - 5.2, 5.8 g (o.674 mol) of vinylacetate were added under vigorous stirring and then dropwise addition of 8.4 g Rongalit C (sodium hydroxymethane sulfinate) in 20 g water was immediately started. The addition was finished after one hour and the temperature maintained at 30 - 33°C. After cooling to 20°C, the solution was neutralized by adding 12 g 50% sodium hydroxide and 10g of sodium metabisulfite.

A clear brown 30%-solutin of pH 6.5 was obtained, having a viscosity of 45 mPa·s which corresponds to an average weight of about 27'000. The polymer content was determined by HPLC analyses to be 28% (93.5% of solid matter content).

The original solution (E-3) as described above, was used for comparison tests in examples 6 and 7.

### Example 4 (R-1)

### "MELMENT F-10",

a commerically available dispersing agent for hydraulic cement masses, which is a sodium salt of sulfonated melamine-formaldehyde polycondensate, of an average weight-molecular weight of about 10'000 was used as reference polymer solution (R-3).

### Example 5 (R-2)

### "LOMAR-D",

a commercially available dispersing agent for hydraulic cement masses which is a sodium salt of a sulfonated naphthalene-formaldehyde polycondensate of weight-average molecular weight 4'000, was obtained as reference polymer solution (R-4).

### Example 6

This example was conducted to demonstrate the improved dispersing effect of the inventive polymers on cement pastes. The polymer solutions E-1 to E-3 were tested in different dosages. Reference polymers R-1 and R-2 were also tested and compared in this context.

According to this example, a rotational viscosimetric determination was used to test the dispersing effect of the copolymers. A Brabender viscocorder, Type No. 8018 with a cement paddle and 120 rpm was used.

The solid matter to be dispersed (Portland cement) was weighted in a Hobart mixer (volume about 4 litres). Under stirring, a dilute aqueous solution of the admixture to be tested was added.

At 10 to 15 minutes after the addition of the solution, the moment of rotation, which is directly proportional to the viscosity of the suspension, was observed from the rotation viscosimeter. The flow effect of a dispersing agent improves as the shear resistance decreases, measured as the moment of rotation, which is exerted by the suspension on the measuring paddle.

The results of this test were quite unexpected in that the polymers according to the invention provided a superior dispersing effect. For example, the results of Table 1 demonstrate that in order to get the same fluidity (a low shear resistance in the range of 180 to 220 g.cm), it was necessary to use the double dosage of reference polymers (0.4 %) compared to inventive dispersants.

**Table 1**

| Dispersing effect of various polymers in Portland cement pastes | | | | |
|---|---|---|---|---|
| Mixt. No. | Polymer Solution | Dosage % solid matter | Shear resistance after 10' | [g.cm] after 15' |
| 1 | without | - | 520 | 530 |
| 2 | E-1 | 0.2 | 200 | 220 |
| | | 0.1 | 260 | 280 |
| 3 | E-2 | 0.2 | 210 | 230 |
| | | 0.1 | 280 | 280 |
| 4 | E-3 | 0.2 | 190 | 190 |
| | | 0.1 | 250 | 250 |
| 5 | R-1 | 0.4 | 210 | 190 |
| | | 0.2 | 290 | 295 |
| | | 0.1 | 350 | 340 |
| 6 | R-2 | 0.4 | 210 | 210 |
| | | 0.2 | 250 | 250 |
| | | 0.1 | 370 | 380 |

### Example 7

This example demonstrates the improved fluidizing effect of ligninsulfonates blended with the inventive polymer E-3.

### Concrete Test

Grading 0-32 mm; cement type I 42.5; 300 kg/m3
Dosage of admixtures: 1% on cement, all admixtures were defoamed
Solids content of all admixtures was 40% except the last blend.
Water/cement ratio - 0.47

| Admixture | Solids content (%) | Dosage (%) | W/C | Air content % | Flow (cm) after x min | | | Start of setting (h) |
|---|---|---|---|---|---|---|---|---|
| | | | | | 0 | 30 | 60 | |
| Na-Lignosulfonate | 40 | 1.00 | 0.47 | 1.1 | 49 | 40 | 35 | 9.8 |
| Blend of 90% Na-Lignosulfonate with 10% Polymer | 40 | 1.00 | 0.47 | 1.1 | 51 | 46 | 44 | 9.3 |
| Blend of 80% Na-Lignosulfonate with 20% Polymer | 40 | 1.00 | 0.47 | 1.0 | 53 | 48 | 45 | 9 |
| Blend of 75% Na-Lignosulfonate with 25% Polymer | 40 | 1.00 | 0.47 | 0.9 | 55 | 50 | 48 | 8.8 |
| Blend of 75% Na-Lignosulfonate with 25% Polymer | 30 | 1.00 | 0.47 | 1.0 | 52 | 44 | 39 | 7.8 |

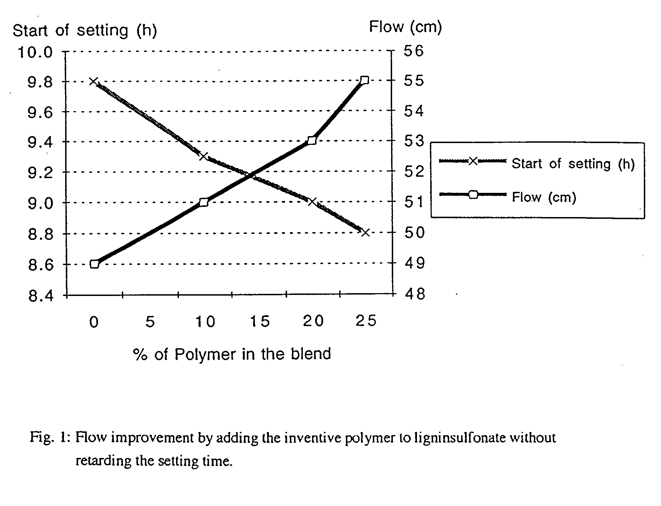

see also Figure 1.

### Example 8

### Concrete Test

Grading 0-32 mm; cement type I 42.5; 350 kg/m3
Dosage of admixtures: 1% on cement, all admixtures were defoamed
Solids content of all admixtures was 30%
Water/cement ratio - 0.45

| Admixture | Air (%) | Flow (cm) after x min. | | | | Start of setting (h) | Strengths (N/mm2) | | |
|---|---|---|---|---|---|---|---|---|---|
| | | 0 | 30 | 45 | 60 | | 1 d | 7 d | 28 d |
| Plain | 1.6 | 43 | 42 | 38 | 38 | 3.3 | 23.5 | 39.0 | 44.0 |
| Na-Lignosulfonate | 1.2 | 55 | 46 | 43 | 41 | 7.0 | 21.4 | 39.2 | 43.8 |
| Blend of 90% Na-Lignosulfonate with 10% Polymer | 1.2 | 56 | 50 | 48 | 48 | 7.3 | 21.8 | 39.9 | 46.1 |
| Blend of 86% Na-Lignosulfonate with 14% Polymer | 1.0 | 58 | 51 | 50 | 49 | 7.3 | 22.6 | 41.8 | 46.6 |
| Blend of 75% Na-Lignosulfonate with 25% Polymer | 0.9 | 62 | 56 | 55 | 53 | 7.5 | 23.1 | 39.2 | 45.2 |

While there are shown and described presently preferred embodiments of the invention, it is to be distinctly understood that the invention is not limited thereto but may be otherwise variously embodied and practiced within the scope of the following claims.

## Claims

1. An improved ligninsulfonate concrete admixture, said admixture comprising
a) 50 to 95 % by weight of a ligninsulfonate blended with
b) 5 to 50 % by weight of a water soluble linear copolymer of vinyl acetate and an N-substituted maleamic acid in a molar ratio of 1:1, represented by Formula (A), whereby both components a) + b) give 100 % per weight 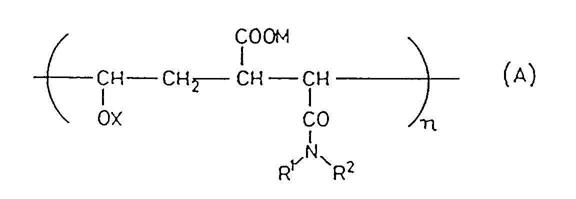
wherein
R1 is as R2 or represents hydrogen,
R2 is a C1 to C4 alkyl residue, a cycloaliphatic or aromatic ring system, or
R1 and R2 may together form a morpholin ring with the nitrogen atom to which they are bonded;
X represents a hydrogen atom or the group -CO-CH₃
M represents a hydrogen atom, a monovalent or divalent metal ion, a substituted or unsubstituted ammonium group.

2. A concrete admixture according to claim 1, wherein R2 is an unsubstituted or substituted C1 to C4 alkyl residue, whereby the substitutents are selected from the group consisting of :
i. alkali metal carboxylates,
ii. alkaline earth metal carboxylates,
iii. hydroxy groups, and
iv. amino groups.

3. A concrete admixture according to claim 1, wherein R2 is an unsubstituted or substituted cycloaliphatic or aromatic ring system, whereby the substitutents are selected from the group consisting of :
i. carboxylic acid groups,
ii. sulfonic acid groups,
iii. alkali metal carboxylates,
iv. alkali metal sulfonates,
v. alkaline earth metal carboxylates,
vi. alkaline earth metal sulfonates, and
vii. hydroxyethyl or hydroxypropyl.

4. A concrete admixture according to one of the claims 1 to 3, wherein said copolymer displays an average molecular weight in the range of 1'000-200'000.

5. A concrete admixture according to one of the claims 1 to 4, whereby said blend of ligninsulfonate and copolymer is a dried or spray dried powder.

6. A concrete admixture according to one of the claims 1 to 4, whereby said blend of ligninsulfonate and copolymer is an aqueous solution.

7. A concrete admixture according to anyone of claims 1 to 5 further comprising at least one of the addititives selected from the group consisting of
i. antifoaming agents,
ii. sulfonated melamine-formaldehyde polycondensates,
iii. sulfonated naphthalene-formaldehyde polycondensates,
iv. phosphonic acids and derivatives thereof,
v. nitrates, nitrites, thiocyanates, and
vi. surfactants.

## Patentansprüche

1. Ein verbessertes Ligninsulfonat Betonzusatzmittel, welches Zusatzmittel umfasst
a) 50 bis 95 Gew.-% eines Ligninsulfonats, gemischt mit
b) 5 bis 50 Gew.-% eines wasserlöslichen linearen Copolymers aus Vinylacetat und einer N-substituierten Maleaminsäure in einem molaren Verhältnis von 1:1, dargestellt durch Formel (A), wobei beide Komponenten a) + b) 100 Gew.-% ergeben 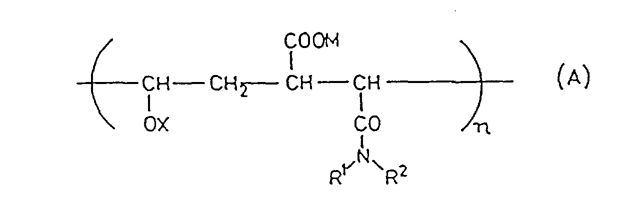
worin
R1 gleich R2 ist oder Wasserstoff darstellt,
R2 ein C1 bis C4 Alkylrest, ein cycloaliphatisches oder aromatisches Ringsystem ist, oder
R1 und R2 können zusammen einen Morpholinring mit dem Stickstoffatom, zu welchem sie gebunden sind, bilden;
X stellt ein Wasserstoffatom oder die Gruppe -CO-CH₃ dar
M stellt ein Wasserstoffatom, ein monovalentes oder divalentes Metallion, eine substituierte und unsubstituierte Ammoniumgruppe dar.

2. Ein Betonzusatzmittel gemäss Anspruch 1, worin R2 ein unsubstituierter oder substituierter C1 bis C4 Alkylrest ist, wobei die Substituenten ausgewählt sind aus der Gruppe bestehend aus:
i. Alkalimetallcarboxylate,
ii. Erdalkalimetallcarboxylate,
iii. Hydroxygruppen und
iv. Aminogruppen.

3. Ein Betonzusatzmittel gemäss Anspruch 1, worin R2 ein unsubstituiertes oder substituiertes cycloaliphatisches oder aromatisches Ringsystem ist, wobei die Substituenten ausgewählt sind aus der Gruppe bestehend aus:
i. Carbonsäuregruppen,
ii. Sulfonsäuregruppen,
iii. Alkalimetallcarboxylate,
iv. Alkalimetallsulfonate,
v. Erdalkalimetallcarboxylate,
vi. Erdalkalimetallsulfonate, und
vii. Hydroxyethyl oder Hydroxypropyl.

4. Ein Betonzusatzmittel gemäss einem der Ansprüche 1 bis 3, worin das Copolymer ein mittleres Molekulargewicht im Bereich von 1'000 bis 200'000 aufweist.

5. Ein Betonzusatzmittel gemäss einem der Ansprüche 1 bis 4, worin die Mischung aus Ligninsulfonat und Copolymer ein getrocknetes oder sprühgetrocknetes Pulver ist.

6. Ein Betonzusatzmittel gemäss einem der Ansprüche 1 bis 4, worin die Mischung aus Ligninsulfonat und Copolymer eine wässrige Lösung ist.

7. Ein Betonzusatzmittel gemäss irgendeinem der Ansprüche 1 bis 5, welches zusätzlich mindestens eines der Additive enthält, die ausgewählt sind aus der Gruppe bestehend aus
i. Schaumverhütungsmittel,
ii. sulfonierte Melamin-Formaldehyd-Polycondensate,
iii. sulfonierte Naphthalin-Formaldehyd-Polycondensate,
iv. Phosphonsäuren und deren Derivate,
v. Nitrate, Nitrite, Thiocyanate, und
vi. Tenside.

## Revendications

1. Adjuvant pour béton à base de sulfonate de lignine amélioré, ledit adjuvant comprenant :
a) 50 à 95% en poids d'un sulfonate de lignine mélangé à
b) 5 à 50% en poids d'un copolymère linéaire soluble dans l'eau d'acétate de vinyle et d'un acide maléamique N-substitué dans un rapport molaire de 1/1, représenté par la formule (A), les deux composants a) + b) donnant 100% en poids, 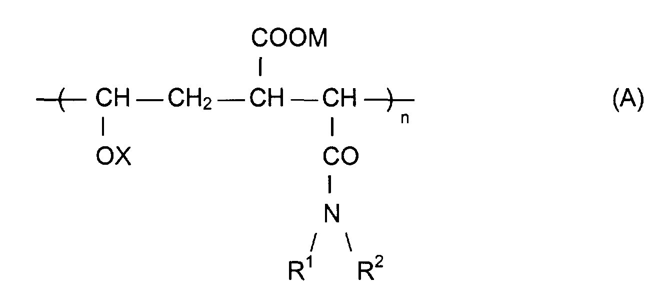 dans laquelle :
R¹ est tel que R² ou représente de l'hydrogène;
R² est un résidu alkyle en C₁ à C₄, un système cycloaliphatique ou cyclique aromatique; ou bien
R¹ et R² peuvent former ensemble un cycle de morpholine avec l'atome d'azote auquel ils sont reliés;
X représente un atome d'hydrogène ou le groupe -CO-CH₃;
M représente un atome d'hydrogène, un ion de métal monovalent ou divalent, un groupe ammonium substitué ou non substitué.

2. Adjuvant pour béton suivant la revendication 1, dans lequel R² est un résidu alkyle en C₁ à C₄ non substitué ou substitué, les substituants étant choisis dans le groupe comprenant :
i. les carboxylates de métal alcalin,
ii. les carboxylates de métal alcalino-terreux,
iii. les groupes hydroxy, et
iv. les groupes amino.

3. Adjuvant pour béton suivant la revendication 1, dans lequel R² est un système cycloaliphatique ou cyclique aromatique non substitué ou substitué, les substituants étant choisis dans le groupe comprenant :
i. les groupes d'acide carboxylique,
ii. les groupes d'acide sulfonique,
iii. les carboxylates de métal alcalin,
iv. les sulfonates de métal alcalin,
v. les carboxylates de métal alcalino-terreux,
vi. les sulfonates de métal alcalino-terreux, et
vii. les groupes hydroxyéthyle et hydroxypropyle.

4. Adjuvant pour béton suivant l'une quelconque des revendications 1 à 3, dans lequel le copolymère précité a un poids moléculaire moyen dans la gamme de 1.000-200.000.

5. Adjuvant pour béton suivant l'une quelconque des revendications 1 à 4, dans lequel le mélange de sulfonate de lignine et de copolymère précité est une poudre séchée ou séchée par pulvérisation.

6. Adjuvant pour béton suivant l'une quelconque des revendications 1 à 4, dans lequel le mélange de sulfonate de lignine et de copolymère précité est une solution aqueuse.

7. Adjuvant pour béton suivant l'une quelconque des revendications 1 à 5, comprenant de plus au moins un des additifs choisis dans le groupe comprenant :
i. les agents antimousses,
ii. les polycondensats de mélamine-formaldéhyde sulfonés,
iii. les polycondensats de naphtalène-formaldéhyde sulfonés,
iv. les acides phosphoniques et leurs dérivés,
v. les nitrates, nitrites, thiocyanates, et
vi. les agents tensioactifs.
